# EUROPEAN PATENT SPECIFICATION

(11) **EP 3 744 542 B1**
(45) Date of publication and mention of the grant of the patent: **05.10.2022**
(21) Application number: 19778145.3
(22) Date of filing: 14.03.2019
(51) Int. Cl.: B60H 1/00, B60H 1/32, F04D 29/42, F04D 17/16, F04D 25/08, F04D 29/08, F04D 29/70

(54) **BLOWING DEVICE FOR VEHICLE AIR CONDITIONING**
BLASVORRICHTUNG FÜR FAHRZEUGKLIMATISIERUNG
DISPOSITIF DE SOUFFLAGE D'AIR POUR LA CLIMATISATION DE VÉHICULE

(30) Priority: 27.03.2018 JP 2018060425
(43) Date of publication of application: 02.12.2020
(73) Proprietor: Japan Climate Systems Corporation, Higashihiroshima-shi, Hiroshima 739-0153 (JP)
(72) Inventor: TANAKA Takeshi, Higashihiroshima-shi, Hiroshima 739-0153 (JP); YONEHARA Shinji, Higashihiroshima-shi, Hiroshima 739-0153 (JP); HAKATA Toshiki, Higashihiroshima-shi, Hiroshima 739-0153 (JP)
(74) Representative: Germain Maureau
(86) International application number: PCT/JP2019/010657
(87) International publication number: WO 2019/188366

(56) References cited:
- WO-A1-2017/163631
- DE-A1-102012 201 712
- JP-A- H 115 429
- JP-A- H1 178 478
- JP-A- 2012 166 658
- JP-A- 2015 067 260
- JP-A- 2017 171 020
- JP-A- 2019 006 160
- JP-B2- 5 304 719

## Description

### TECHNICAL FIELD

The present invention relates to vehicle air-conditioning air blowers each mounted on an automobile, for example, to blow air-conditioning air, and more particularly relates to a structure that drives a blower fan through a motor disposed below the blower fan.

### BACKGROUND ART

Typically, an air conditioner mounted on a vehicle selects either air inside a cabin (inside air) or air outside the cabin (outside air) to blow the selected air as air-conditioning air, and the blown air has its temperature controlled by a cooling heat exchanger and a heating heat exchanger, and is then fed to areas inside the cabin.

Recently commercialized vehicle air-conditioning air blowers for blowing air-conditioning air include a device that is switchable among an inside-air circulation mode in which only the inside air is blown, an outside-air introduction mode in which only the outside air is blown, and an inside-outside air double flow mode in which both inside air and outside air are blown. That is to say, as disclosed in JP 2000-296710, JP 2001-206044, JP 2011-201501 and JP 2015-67260, a casing of a vehicle air-conditioning air blower has an inside air inlet, an outside air inlet, an upper air passage, and a lower air passage. The upper and lower air passages each include therein a blower fan. These two blower fans are driven by a common motor. The casing is provided with an inside/outside air switching damper for opening and closing the inside air inlet and the outside air inlet. The inside/outside air switching damper allows switching to be made among the inside-air circulation mode in which only the inside air inlet is opened, the outside-air introduction mode in which only the outside air inlet is opened, and the inside-outside air double flow mode in which the inside air inlet and the outside air inlet are opened. If the two blower fans are rotated, and the inside-air circulation mode is selected, the inside air introduced through the inside air inlet flows through the upper and lower air passages. Alternatively, if the outside-air introduction mode is selected, the outside air introduced through the outside air inlet flows through the upper and lower air passages. Still alternatively, if the inside-outside-air double flow mode is selected, the outside air introduced through the outside air inlet flows through the upper air passage, and the inside air introduced through the inside air inlet flows through the lower air passage.

A vehicle air-conditioning air blower of JP 2015-67260 includes a scroll casing housing a blower fan. The scroll casing includes an upper scroll casing and a lower scroll casing. An upper portion of the lower scroll casing is fitted into a lower portion of the lower scroll casing, thereby integrating the upper and lower scroll casings together.

The scroll casing includes therein a partition plate extending horizontally through a vertically intermediate portion of the scroll casing. The partition plate partitions the interior of the scroll casing into upper and lower air passages. A peripheral portion of the partition plate is vertically sandwiched between the lower portion of the upper scroll casing and the upper portion of the lower scroll casing.

### SUMMARY OF THE INVENTION

### TECHNICAL PROBLEM

The scroll casing including therein a centrifugal fan is provided with a bell mouth member having a bell mouth on a side of the blower fan from which air is sucked. However, rainwater or car-washing water may enter the interior of the scroll casing through the outside air inlet, and may be accumulated on the bell mouth member.

In JP 2015-67260, the partition plate provided inside the scroll casing has a communication hole through which the upper and lower scroll casings communicate with each other. Water accumulated on the partition plate passes through the communication hole, and is then allowed to flow through the lower air passage. The water is drained out of the cabin through a drainage hole together with condensed water in an evaporator.

However, in the case of using a bell mouth member, if the amount of blowing air is large, air sucked into the blower fan may flow vigorously around the bell mouth member. In this state, even if water accumulated on the bell mouth member is to be drained downward, the water is splashed by the flow of the air and is then sucked into the blower fan, which may deteriorate a drainage performance.

In view of the foregoing background, it is therefore an object of the present invention to improve a drainage performance for water accumulated on the bell mouth member.

WO 2017/163631 relates to a vehicle air-conditioning air blower according to the preamble of claim 1. JP 5304719 relates to a blower unit of vehicle air conditioner. DE 10 2012 201712 relates to a blower unit.

### SOLUTION TO THE PROBLEM

In order to achieve the above objective, in the present invention, a wind shield is provided on a lower side of the bell mouth member, to make water draining downward of the bell mouth member be less likely to be splashed.

A first aspect of the invention is defined by claim 1 and is directed to a vehicle air-conditioning air blower including: a casing having an inside air inlet through which air inside a cabin is introduced into the casing, and an outside air inlet through which air outside the cabin is introduced into the casing, the casing further having a first air passage and a second air passage each communicating with both of the inside air inlet and the outside air inlet, the casing housing an inside/outside air switching damper that opens and closes the inside air inlet and the outside air inlet; a centrifugal blower fan disposed inside the casing and having a first blade and a second blade; and a motor disposed below the blower fan and having a rotational shaft that rotates to drive the blower fan and extending vertically. The first blower fan sends air in the first air passage as air-conditioning air by the first blade, and the second blower fan sends air in the second air passage as air-conditioning air by the second blade. The vehicle air-conditioning air blower further includes a bell mouth component including a bell mouth plate that has a bell mouth orifice disposed to face a lower side of the blower fan and extending in a radial direction of the blower fan. The bell mouth plate has an outer circumferential side with respect to the bell mouth orifice, the outer circumferential side having a drainage hole through which water on the top of the bell mouth plate is drained downward of the bell mouth plate. The bell mouth component includes a wind shield extending downward from the circumference of an opening of the drainage hole on the lower surface of the bell mouth plate and avoiding wind from reaching the circumference of the opening.

With this configuration, when the inside air inlet is opened, and the outside air inlet is closed by an operation of the inside/outside air switching damper, the vehicle air-conditioning air blower operates in the inside-air circulation mode in which inside air is introduced through the inside air inlet thereinto. In the inside-air circulation mode, the blower fan rotating allows the inside air introduced through the inside air inlet to flow through the first and second air passages by the first and second blades and to be then sent as air-conditioning air. If an operation of the inside/outside air switching damper allows the inside air inlet to close, and allows the outside air inlet to open, the vehicle air-conditioning air blower operates in the outside-air introduction mode in which outside air is introduced through the outside air inlet thereinto. In the outside-air introduction mode, the blower fan rotating allows the outside air introduced through the outside air inlet to flow through the first and second air passages and to be then sent as air-conditioning air. Further, if the inside air inlet and the outside air inlet are opened by an operation of the inside/outside air switching damper, the vehicle air-conditioning air blower operates in the inside-outside air double flow mode to rotate the blower fan. With the rotation, the outside air introduced through the outside air inlet flows through one of the first and second air passages, and the inside air introduced through the inside air inlet flows through the other air passage. Thus, a combination of the outside air and the inside air is sent as air-conditioning air. That is to say, an optional one of the outside-air introduction mode, the inside-air circulation mode, and the inside-outside air double flow mode can be selected, and air can be sent in the selected mode.

During air blowing, the bell mouth orifice is disposed to face the lower side of the blower fan, thereby improving air blowing efficiency. For example, if rainwater or car-washing water enters the interior of the scroll casing through the outside air inlet, it may be accumulated on the top of the bell mouth plate. The water on the top of the bell mouth plate flows downward of the bell mouth plate from the drainage hole of the bell mouth plate. At this time, since a wind shield extending downward is provided on the circumference of an opening of the drainage hole on the lower surface of the bell mouth plate, wind is avoided from reaching the circumference of the opening of the drainage hole. Therefore, the water flowing downward of the bell mouth plate portion is less likely to be splashed by the air sucked into the blower fan.

A second aspect of the invention is an embodiment of the first aspect of the invention. In the second aspect, the bell mouth component is a member different from the casing.

With this configuration, since the bell mouth component is a member different from the casing, the degree of freedom in the shape of the wind shield can be improved. Thus, the wind shield can be formed in a shape with which a wind shielding effect is further enhanced.

A third aspect of the invention is an embodiment of the second aspect of the invention. In the third aspect, the wind shield is a leg supporting the bell mouth plate from below.

With this configuration, wind can be avoided from reaching the circumference of an opening of the drainage hole by the leg, and the configuration of the bell mouth component is simplified.

A fourth aspect of the invention is an embodiment of the second aspect of the invention. In the fourth aspect, the bell mouth component has a leg supporting the bell mouth plate from below, and the wind shield is apart from the leg in the circumferential direction of the blower fan.

With this configuration, the drainage hole and the wind shield can be provided at the respective positions optimal for drainage while the leg is disposed at a position optimal for supporting the bell mouth plate.

A fifth aspect of the invention is an embodiment of the third aspect of the invention. In the fifth aspect, the wind shield has a recessed cross section recessed in the radial direction of the blower fan.

With this configuration, the air is less likely to flow inward of the wind shield, thereby improving the wind shielding effect.

A sixth aspect of the invention is an embodiment of the fifth aspect of the invention. In the sixth aspect, the wind shield has a recessed cross section recessed in the radial direction of the blower fan.

That is, air flowing toward the blower fan generally flows from radially outward toward inward. In this aspect of the invention, since the wind shield has a recessed cross section recessed in the radial direction of the blower fan, air flowing toward the blower fan is less likely to enter the interior of the wind shield, thereby improving the wind shielding effect.

A seventh aspect of the invention is an embodiment of the first aspect of the invention. In the seventh aspect, the lower end portion of the wind shield is in contact with the bottom surface of the casing.

With this configuration, since the lower end portion of the wind shield is in contact with the bottom surface of the casing, the wind shielding effect can be exhibited in a range from the bell mouth plate to the bottom surface of the casing.

An eighth aspect of the invention is an embodiment of the first aspect of the invention. In the eighth aspect, the bell mouth plate has an inner circumferential side having a curved portion curved upward toward the bell mouth orifice, and an outer circumferential side with respect to the curved portion, the outer circumferential side being flat and having the drainage hole.

With this configuration, water is more likely to flow toward the outer circumferential side of the bell mouth plate with respect to the curved portion. Since the drainage hole is formed on this outer circumferential side, water on the top of the bell mouth plate is easily drained.

### ADVANTAGES OF THE INVENTION

In the first aspect of the invention, the wind shield is provided on the circumference of an opening of the drainage hole on the lower surface of the bell mouth plate. Thus, water drained downward of the bell mouth member is less likely to be splashed, thereby allowing a drainage performance of water accumulated on the bell mouth member to be improved.

In the second aspect of the invention, the bell mouth component is a member different from the casing. Thus, the degree of freedom in the shape of the wind shield can be improved.

In the third aspect of the invention, the wind shield can be a leg supporting the bell mouth plate from below. Thus, the configuration of the bell mouth component can be simplified.

In the fourth aspect of the invention, the wind shield is apart from the leg supporting the bell mouth plate from below in the circumferential direction of the blower fan. Thus, the drainage hole and the wind shield are provided at the respective positions optimal for drainage while the leg is disposed at a position optimal for supporting the bell mouth plate.

In the fifth aspect of the invention, the wind shield has a recessed cross section recessed in the radial direction of the blower fan. Thus, air is less likely to enter the interior of the wind shield, thereby improving the wind shielding effect.

In the sixth aspect of the invention, the wind shield has a recessed cross section recessed inward in the radial direction of the blower fan. Thus, the wind shielding effect can further be enhanced.

In the seventh aspect of the invention, the lower end portion of the wind shield is in contact with the bottom surface of the casing. Thus, the wind shielding effect can be exhibited in a wide range from the bell mouth plate to the bottom surface of the casing, thereby allowing the drainage performance to be further enhanced.

In the eighth aspect of the invention, the bell mouth plate has an inner circumferential side having a curved portion curved upward toward the bell mouth orifice, and an outer circumferential side with respect to the curved portion, the outer circumferential side being flat and having a drainage hole. Thus, water on the top of the bell mouth plate is likely to be drained.

### BRIEF DESCRIPTION OF THE DRAWINGS

[FIG. 1] FIG. 1 is a back view of a vehicle air-conditioning air blower according to an embodiment of the present invention.
[FIG. 2] FIG. 2 is a left side view of the vehicle air-conditioning air blower.
[FIG. 3] FIG. 3 is a bottom view of the vehicle air-conditioning air blower.
[FIG. 4] FIG. 4 is a cross-sectional view taken along line IV-IV shown in FIG. 1.
[FIG. 5] FIG. 5 is a longitudinal sectional view of the vehicle air-conditioning air blower.
[FIG. 6] FIG. 6 is a plan view of a bell mouth component.
[FIG. 7] FIG. 7 is a view of a bell mouth component as viewed in the B direction of FIG. 6.
[FIG. 8] FIG. 8 is a view of a bell mouth component as viewed in the C direction of FIG. 6.
[FIG. 9] FIG. 9 is an enlarged view of a lower portion of a cross-sectional view taken along line IV-IV shown in FIG. 1.
[FIG. 10] FIG. 10 illustrates an assembly of a bell mouth component with a bottom wall member viewed from above, omitting a blower fan.
[FIG. 11] FIG. 11 is a view corresponding to FIG. 6, illustrating to a variation of an embodiment.
[FIG. 12] FIG. 12 is a view of a bell mouth component according to the variation as viewed in the E direction of FIG. 11.
[FIG. 13] FIG. 13 is a view corresponding to FIG. 9, illustrating the variation.

### DESCRIPTION OF EMBODIMENTS

Embodiments of the present invention will now be described in detail with reference to the drawings. The following description of preferred embodiments is a mere example in nature.

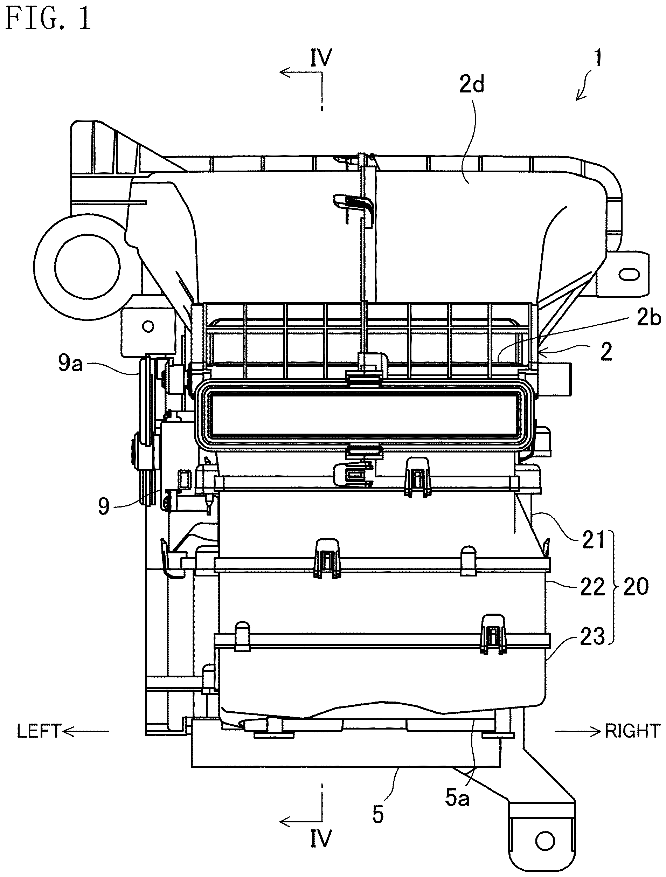

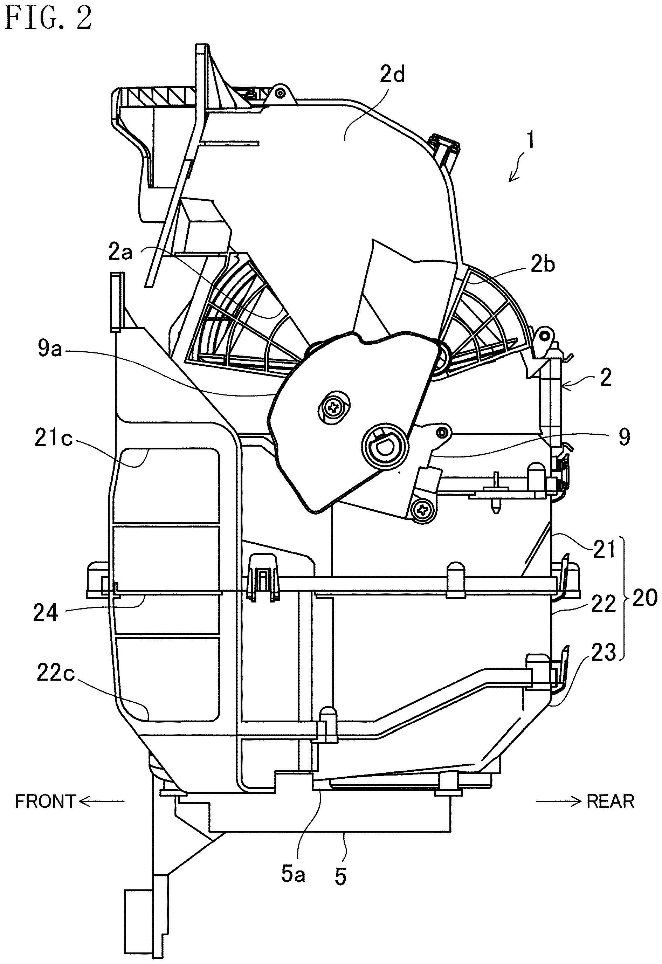

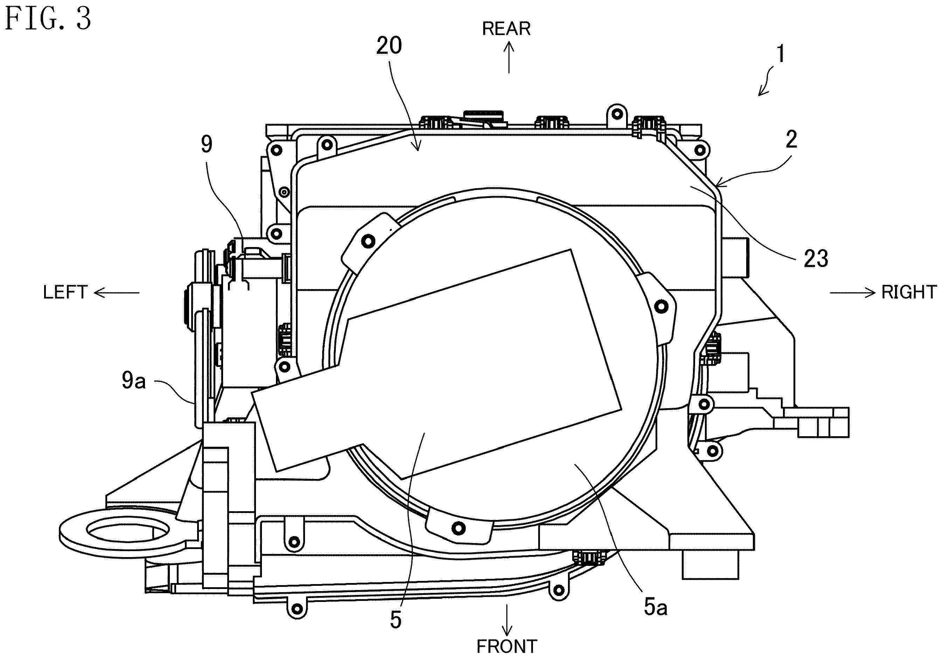

FIG. 1 illustrates a vehicle air-conditioning air blower 1 according to an embodiment of the present invention, as viewed from the rear side of a vehicle. FIG. 2 illustrates the vehicle air-conditioning air blower 1, as viewed from the left side of the vehicle. FIG. 3 illustrates the vehicle air-conditioning air blower 1, as viewed from the lower side of the vehicle. This vehicle air-conditioning air blower 1 is disposed in, for example, a cabin of an automobile to blow air-conditioning air, and forms a vehicle air conditioner together with an air conditioning unit (not shown) and a refrigeration cycle system.

The air conditioning unit includes, for example, a cooling heat exchanger serving as an evaporator of a refrigeration cycle, a heating heat exchanger serving as a heater core, an air mixing damper, a blowing direction switching damper, and an air-conditioning casing housing these components. Air-conditioning air blown from the vehicle air-conditioning air blower 1 is introduced into the air-conditioning casing, and passes through the cooling heat exchanger and the heating heat exchanger to generate air-conditioned wind having an intended temperature. Then, the air-conditioned wind is fed to areas inside the cabin in accordance with a blowout mode selected by the blowing direction switching damper. The temperature of the air-conditioned wind is adjusted by the amount of air which passes through the heating heat exchanger which is determined by the air mixing damper.

In the following description of this embodiment, the front, rear, left, and right sides of the vehicle will be simply referred to as the "front," "rear," "left," and "right," respectively. These definitions are merely prepared for easy understanding, and do not limit how the vehicle air-conditioning air blower is actually used, how the vehicle air-conditioning air blower is actually installed, and how the vehicle air-conditioning air blower is actually assembled.

The vehicle air-conditioning air blower 1 is housed in an instrument panel (not shown) arranged in a front end portion of the cabin of the vehicle together with the air conditioning unit. The air conditioning unit is disposed in a substantially laterally central portion of the interior of the instrument panel, while the vehicle air-conditioning air blower 1 is disposed inside the instrument panel on the passenger's side of the air conditioning unit (on the left side of the air conditioning unit in the case of a right-hand drive vehicle, or on the right side thereof in the case of a left-hand drive vehicle). This embodiment illustrates a situation where the vehicle air-conditioning air blower 1 is disposed in a right portion of the vehicle. However, if a vehicle air-conditioning air blower 1 is disposed in a left portion of the vehicle, this vehicle air-conditioning air blower 1 has a structure bilaterally symmetrical to that of the vehicle air-conditioning air blower 1 according to this embodiment. Thus, this situation will not be described in detail.

### (Configuration of Vehicle)

Although not shown, the vehicle including the vehicle air-conditioning air blower 1 includes a dashboard (a partition member) for separating an engine compartment and a cabin from each other. The engine compartment is formed in a front portion of the vehicle, and includes an engine, a transmission, and other components. The dashboard extends in a substantially vertical direction. A cowl extending in a lateral direction is disposed on an upper portion of the dashboard. The cowl has a communication port communicating with the outside of the cabin. Since the cowl is disposed outside the cabin, rainwater, car-washing water, snow, and any other substance may enter the cowl.

### (Configuration of Vehicle Air-Conditioning Air Blower)

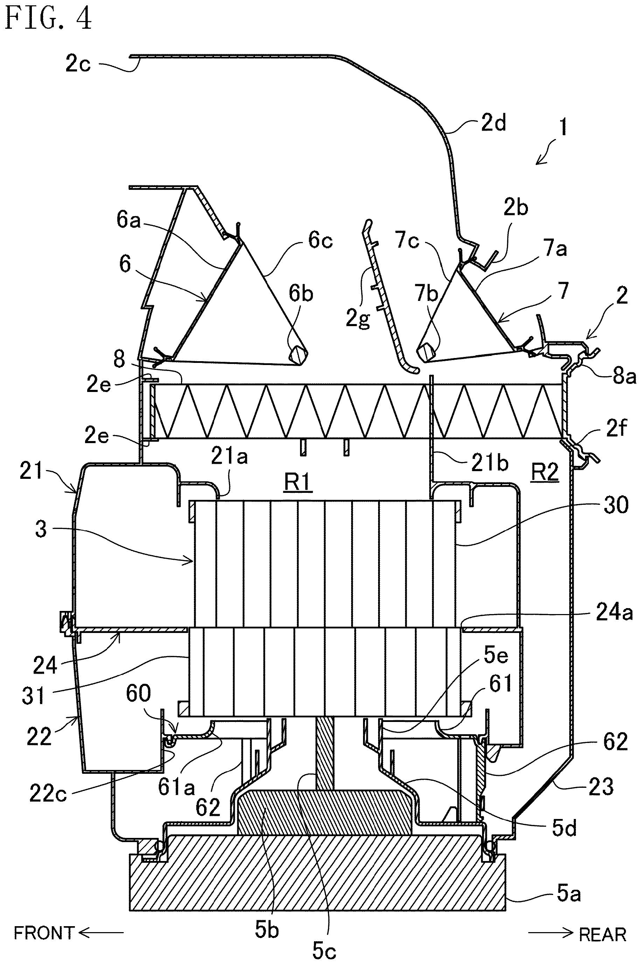

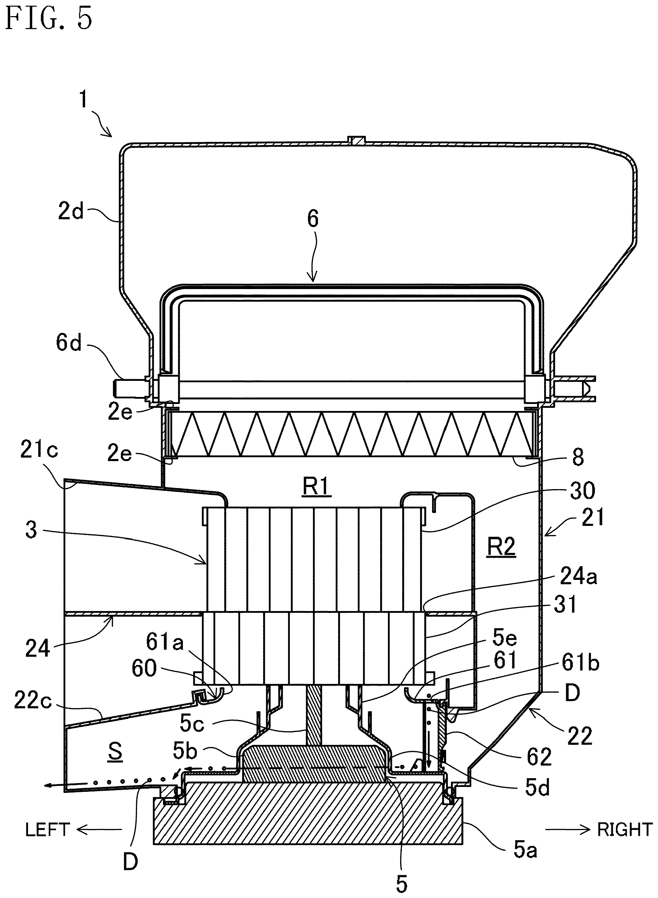

As shown also in FIGS. 4 and 5, the vehicle air-conditioning air blower 1 includes a blowing casing 2, a blower fan 3, a motor 5 for rotationally driving the blower fan 3, a first inside/outside air switching damper 6, a second inside/outside air switching damper 7, an air filter 8, and an inside/outside air switching actuator 9 (illustrated in FIGS. 1 and 2). The blower fan 3, the first and second inside/outside air switching dampers 6 and 7, and the air filter 8 are housed in the blowing casing 2.

An upper portion of the blowing casing 2 has front and rear inside air inlets 2a and 2b illustrated in FIG. 2 and other figures, and an outside air inlet 2c illustrated in FIG. 4. As illustrated in FIG. 2, the front inside air inlet 2a is formed through a portion of the upper portion of the blowing casing 2 closer to the front end of the blowing casing 2 than a central portion thereof in the front-to-rear direction, and opens to the interior of the cabin. The rear inside air inlet 2b is formed through a portion of the upper portion of the blowing casing 2 closer to the rear end of the blowing casing 2 than the central portion thereof in the front-to-rear direction, and opens to the interior of the cabin. Air in the cabin (inside air) can be introduced into the blowing casing 2 through the front and rear inside air inlets 2a and 2b.

As illustrated in FIG. 4, the upper portion of the blowing casing 2 has an outside air inlet duct portion 2d integrated with the blowing casing 2 to bulge upward from a portion of the blowing casing 2 between the front and rear inside air inlets 2a and 2b. An upper portion of the outside air inlet duct portion 2d extends forward. The outside air inlet 2c opens through a front end of the outside air inlet duct portion 2d. The outside air inlet duct portion 2d is connected to the cowl. The outside air inlet 2c communicates with the outside of the cabin through the cowl. Air outside the cabin (outside air) can be introduced into the blowing casing 2 through the outside air inlet 2c.

As illustrated in FIG. 4, the filter 8 is housed in a portion of the interior of the blowing casing 2 below the front and rear inside air inlets 2a and 2b and the outside air inlet 2c. The filter 8 is formed in the shape of a plate, and extends horizontally. A peripheral portion of the filter 8 is supported by filter support portions 2e provided inside the blowing casing 2. A rear wall portion of the blowing casing 2 has a filter insertion hole 2f through which the filter 8 is to be inserted into the blowing casing 2. The filter insertion hole 2f is closed by a lid portion 8a configured as a rear end portion of the filter 8. Note that the filter 8 may be made of, for example, a general nonwoven fabric.

A partition wall portion 2g is provided above the filter 8 inside the blowing casing 2. The partition wall portion 2g extends in the top-to-bottom direction, and is slightly inclined so as to be closer to the rear side of the blowing casing 2 toward its lower end portion. An upper portion of the interior of the blowing casing 2 has a first air passage R1 in front of the partition wall portion 2g, and a second air passage R2 behind the partition wall portion 2g. The width of the first air passage R1 in the front-to-rear direction is set to be greater than that of the second air passage R2 in the front-to-rear direction, and the cross-sectional area of the first air passage R1 is larger than that of the second air passage R2.

An upstream end portion (upper end portion) of the first air passage R1 communicates with the front inside air inlet 2a and the outside air inlet 2c. An upstream end portion (upper end portion) of the second air passage R2 communicates with the rear inside air inlet 2b and the outside air inlet 2c. The first and second air passages R1 and R2 communicate with the common outside air inlet 2c, while communicating with the separate inside air inlets 2a and 2b, respectively. This allows inside air and outside air to be introduced into both of the first and second air passages R1 and R2.

The first inside/outside air switching damper 6 is disposed in front of the partition wall portion 2g inside the blowing casing 2, and includes a closing plate portion 6a, a shaft portion 6b, and end plate portions 6c. The closing plate portion 6a extends in the lateral direction. The shaft portion 6b also extends in the lateral direction, and is supported by both lateral side wall portions of the blowing casing 2 so as to be turnable. The end plate portions 6c are respectively provided near both lateral ends of the shaft portion 6b. The end plate portions 6c extend radially from the shaft portion 6b, and are respectively arranged adjacent to the lateral end portions of the closing plate portion 6a. The closing plate portion 6a, the shaft portion 6b, and the end plate portions 6c are integrated together. The first inside/outside air switching damper 6 turns around the center line of the shaft portion 6b. This allows switching to be made between the state where the first inside/outside air switching damper 6 has turned forward as shown in FIG. 4 and the state where the first inside/outside air switching damper 6 has turned rearward although not shown. If the first inside/outside air switching damper 6 has turned forward, the front inside air inlet 2a is closed, and the outside air inlet 2c is opened. This prevents the inside air from flowing into the blowing casing 2, and allows the outside air to be introduced into an upstream end portion of the first air passage R1. On the other hand, if the first inside/outside air switching damper 6 has turned rearward, the front inside air inlet 2a is opened, and the outside air inlet 2c is closed. This prevents the outside air from flowing into the blowing casing 2, and allows the inside air to be introduced into the upstream portion of the first air passage R1.

The second inside/outside air switching damper 7 is disposed behind the partition wall portion 2g inside the blowing casing 2, and includes a closing plate portion 7a, a shaft portion 7b, and end plate portions 7c, just like the first inside/outside air switching damper 6. The second inside/outside air switching damper 7 turns around the center line of the shaft portion 7b. This allows switching to be made between the state where the second inside/outside air switching damper 7 has turned rearward as shown in FIG. 4 and the state where the second inside/outside air switching damper 7 has turned forward although not shown. If the second inside/outside air switching damper 7 has turned rearward, the rear inside air inlet 2b is closed, and the outside air inlet 2c is opened. This prevents the inside air from flowing into the blowing casing 2, and allows the outside air to be introduced into an upstream end portion of the second air passage R2. On the other hand, if the second inside/outside air switching damper 7 has turned forward, the rear inside air inlet 2b is opened, and the outside air inlet 2c is closed. This prevents the outside air from flowing into the blowing casing 2, and allows the inside air to be introduced into the upstream end portion of the second air passage R2.

The first and second inside/outside air switching dampers 6 and 7 are driven by the inside/outside air switching actuator 9 illustrated in FIGS. 1, 2, and other figures. Although not shown, the inside/outside air switching actuator 9 is controlled by an air-conditioning control apparatus. A link member 9a engages with the shaft portion 6b of the first inside/outside air switching damper 6 and the shaft portion 7b of the second inside/outside air switching damper 7, and is turned by the inside/outside air switching actuator 9 to allow the first and second inside/outside air switching dampers 6 and 7 to interlock with each other. Since a well-known technique can be used for the structure in which the first and second inside/outside air switching dampers 6 and 7 interlock with each other using the link member 9a, the structure will not be described in detail. Further, the first and second inside/outside air switching dampers 6 and 7 may be separately driven without using the link member 9a.

In this embodiment, the first and second inside/outside air switching dampers 6 and 7 are driven as follows. Specifically, as illustrated in FIG. 4, an optional one of three modes, i.e., an outside-air introduction mode, an inside-air circulation mode, and an inside-outside air double flow mode, can be selected. In the outside-air introduction mode, the first inside/outside air switching damper 6 is turned forward, and the second inside/outside air switching damper 7 is turned rearward. In the inside-air circulation mode, the first inside/outside air switching damper 6 is turned rearward, and the second inside/outside air switching damper 7 is turned forward. In the inside-outside air double flow mode, the first inside/outside air switching damper 6 is turned forward, and the second inside/outside air switching damper 7 is turned forward.

In the outside-air introduction mode, since the first inside/outside air switching damper 6 turns forward, and the second inside/outside air switching damper 7 turns rearward, only outside air is introduced into the first and second air passages R1 and R2. In the inside-air circulation mode, the first inside/outside air switching damper 6 turns rearward, and the second inside/outside air switching damper 7 turns forward. This allows only inside air to be introduced into the first and second air passages R1 and R2. In the inside-outside air double flow mode, the first inside/outside air switching damper 6 turns forward, and the second inside/outside air switching damper 7 turns forward. This allows outside air to be introduced into the first air passage R1, and allows inside air to be introduced into the second air passage R2. The inside-outside air double flow mode is used during heating.

Switching is made among the inside-air circulation mode, the outside-air introduction mode, and the inside-outside air double flow mode by a well-known automatic air-conditioning control technique. Selecting the inside-outside air double flow mode allows outside air, which is relatively dry in winter, to be fed to a defrost outlet to successfully defog a windshield glass, and allows relatively warm inside air to be fed to a heat outlet to improve heating efficiency.

A scroll casing 20 housing the blower fan 3 is provided below the inside air inlets 2a and 2b and the outside air inlet 2c of the blowing casing 2. As illustrated in FIGS. 1 and 2, the scroll casing 20 is divided into an upper scroll casing 21 in which a portion of the blower fan 3 provided with upper blades (first blades) 30 is housed, and a lower scroll casing 22 in which a portion of the blower fan 3 provided with lower blades (second blades) 31 is housed. A lower portion of the upper scroll casing 21 and an upper portion of the lower scroll casing 22 are fitted to each other, thereby integrating the upper and lower scroll casings 21 and 22 together. The upper and lower blades 30 and 31 may also be referred to as "blades."

A bottom wall member 23 is provided for a lower portion of the scroll casing 20. The bottom wall member 23 is a component of the scroll casing 20. The upper scroll casing 21, the lower scroll casing 22, and the bottom wall member 23 form the scroll casing 20. Further, a partition plate 24 that partitions the interior of the scroll casing 20 into upper and lower spaces is disposed inside the scroll casing 20, and is also a component of the scroll casing 20.

An upper wall portion of the upper scroll casing 21 has a substantially circular first bell mouth orifice 21a (upper bell mouth orifice) 21a that opens to the interior of the blowing casing 2. The first bell mouth orifice 21a faces a lower surface of the filter 8, and communicates with the first air passage R1. The upper side of the blower fan 3 is positioned directly below the first bell mouth orifice 21a. That is, the first bell mouth orifice 21a also faces the upper side of the blower fan 3. The upper side of the blower fan 3 is a side on which air is sucked, and air is sucked from this upper side of the blower fan 3.

The upper wall portion of the upper scroll casing 21 is provided with a protruding wall portion 21b protruding upward. The protruding wall portion 21b is positioned behind the edge of the first bell mouth orifice 21a, and extends in the lateral direction. An upper end of the protruding wall portion 21b reaches an area near the lower end portion of the partition wall portion 2g. The protruding wall portion 21b and the partition wall portion 2g partition a portion of the interior of the blowing casing 2 above the upper scroll casing 21 into front and rear spaces. As a result, the first air passage R1 is formed in front of the protruding wall portion 21b and the partition wall portion 2g, and the second air passage R2 is formed behind the protruding wall portion 21b and the partition wall portion 2g.

The first air passage R1 communicates with the interior of the upper scroll casing 21 through the first bell mouth orifice 21a. The interior of the upper scroll casing 21 serves as a portion of the first air passage R1. A portion of the blowing casing 2 above the partition plate 24 is defined as the first air passage R1. A portion of the blower fan 3 provided with the upper blades 30 is disposed in the first air passage R1 inside the upper scroll casing 21. The blower fan 3 rotating inside the upper scroll casing 21 allows the portion of the blower fan 3 provided with the upper blades 30 to send air in the first air passage R1 as air-conditioning air. In other words, the portion of the blower fan 3 provided with the upper blades 30 is a portion of the blower fan 3 that forms an upper one of air flows.

As illustrated in FIG. 4, the partition plate 24 has a through hole 24a through which the blower fan 3 is inserted from the second air passage R2 toward the first air passage R1. The through hole 24a has a diameter larger than the outer diameter of the portion of the blower fan 3 provided with the upper blades 30, thereby allowing the upper portion of the blower fan 3 to be inserted through the through hole 24a.

As illustrated in FIG. 2, a front portion of a left side wall portion of the upper scroll casing 21 has an upper air outlet 21c connected to the air conditioning unit. A downstream end of the first air passage R1 communicates with the upper air outlet 21c, and air in the first air passage R1 is blown out of the upper air outlet 21c to the outside of the upper scroll casing 21.

As illustrated in FIG. 4, the second air passage R2 extends downward through a rear portion of the interior of the upper scroll casing 21, and a lower end portion of the second air passage R2 reaches the bottom wall member 23. A lower wall portion of the lower scroll casing 22 is spaced apart upward from the bottom wall member 23, and the lower end portion of the second air passage R2 is located between the lower wall of the lower scroll casing 22 and the bottom wall member 23.

As illustrated in FIGS. 4 and 5, the scroll casing 20 includes therein a bell mouth component 60. This bell mouth component 60 is a component of the vehicle air-conditioning air blower 1 and is a separate member from the scroll casing 20. The bell mouth component 60 further includes a bell mouth plate 61 that has a second bell mouth orifice (lower bell mouth orifice) 61a disposed to face the lower side of the blower fan 3 and that extends in the radial direction of the blower fan 34, and includes a plurality of legs (wind shields) 62. The bell mouth plate 61 and the legs 62 are made of a resin material, and are integrally molded.

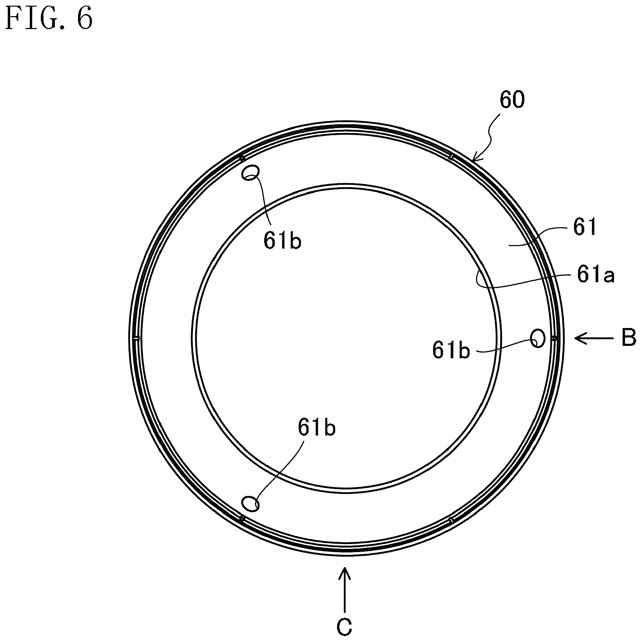

The second bell mouth orifice 61a is substantially circular, and is positioned concentrically with the first bell mouth orifice 21a in a plan view. The second bell mouth orifice 61a may have a diameter larger than that of the first bell mouth orifice 21a. As illustrated in FIG. 6, since the bell mouth plate 61 has a second bell mouth orifice 61a, the inner peripheral portion of the bell mouth plate is substantially circular. The outer peripheral portion of the bell mouth plate 61 is also substantially circular. The bell mouth plate 61 is entirely annular, and entirely has an approximately identical width in the circumferential direction of the bell mouth plate 61.

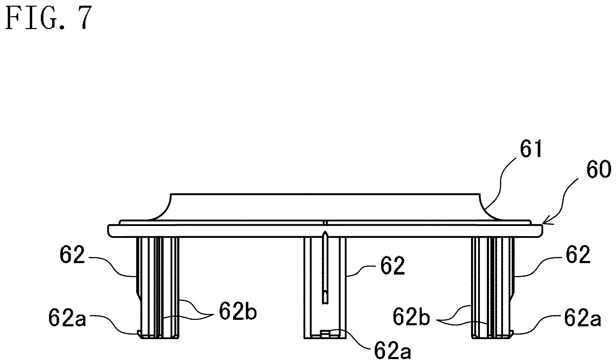

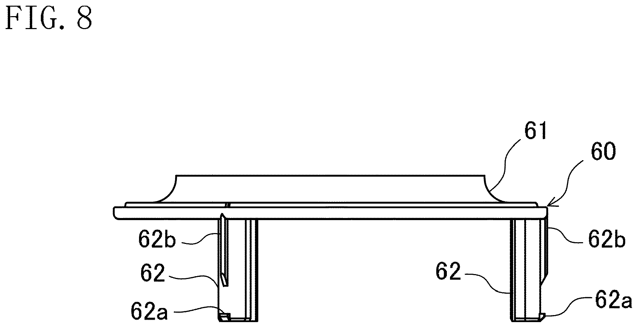

As illustrated in FIGS. 7 and 8, the inner circumferential side of the bell mouth plate 61 has a curved portion curved upward toward the second bell mouth orifice 61a. The outer circumferential side of the bell mouth plate 61 than the curved portion is flat. This flat portion has a plurality of drainage holes 61b spaced apart from each other in the circumferential direction, as illustrated in FIG. 6. That is, the outer circumferential side of the bell mouth plate 61 than the second bell mouth orifice 61a has drainage holes 61b for draining water on the top of the bell mouth plate 61 downward of the bell mouth plate 61, and these drainage holes 61b avoid water on the top of the bell mouth plate 61 from accumulating and remaining.

The drainage holes 61b may be arranged at regular intervals or irregular intervals in the circumferential direction of the bell mouth plate 61, i.e., in the circumferential direction of the blower fan 3. The number of the drainage holes 61b in this embodiment is three, but may be one, two, or four or more. The drainage holes 61b may be circular or oval, and may further be in a slit shape, a rectangular shape, or any other shape.

Each leg 62 extends downward from the circumference of the opening of the corresponding drainage hole 61b on the lower surface of the bell mouth plate 61 and supports the bell mouth plate 61 from below. Since each of the legs 62 extends from the circumference of each of the openings of the respective drainage holes 61b, three legs are provided in this embodiment. The number of the legs 62 may not be the same as that of the drainage holes 61b, and either of the numbers may be higher than the other.

As illustrated in FIGS. 5, 7, and 9, each of the legs 62 has a recessed cross section recessed inward in the radial direction of the blower fan 3. With this recessed cross section, air flowing from outward to inward in the radial direction of the blower fan 3 at the time of rotation of the blower fan 3 is less likely to flow inward of the legs 62. Thus, the legs 62 serve as wind shields that avoid wind from reaching the circumferences of the openings of the respective drainage holes 61b.

The lower end portion of each of the legs 62 is in contact with the bottom surface of the scroll casing 20. In this embodiment, the bottom surface of the scroll casing 20 is the outer circumference portion of the cover 5d (described later) covering the body 5b of the motor 5 from above. Therefore, the lower end portion of each of the legs 62 is in contact with the outer circumferential portion of the cover 5d from above. Accordingly, the bell mouth component 60 is supported relative to the cover 5d, and the height of the second bell mouth orifice 61a is determined to be desired.

An engaging claw 62a is formed at the lower end portion of each of the legs 62. The engaging claw 62a is formed to protrude outward in the radial direction of the blower fan 3 from the lower end portion of the leg 62. An outer engagement portion 23a is formed apart upward of the bottom surface of the scroll casing 20. An inner engagement portion 23b is formed on the bottom surface of the casing 20 to be apart inward in the radial direction of the blower fan 3 from the outer engagement portion 23a. The leg 62 is inserted between the outer engagement portion 23a and the inner engagement portion 23b, and in this insertion state, the engaging claw 62a is engaged with the outer engagement portion 23a from below, thereby avoiding the bell mouth component 60 from coming off. The leg 62 is provided with a protrusion 62b extending vertically.

The lower end portion of the second air passage R2 communicates with the interior of the lower scroll casing 22 through the second bell mouth orifice 61a. The interior of the lower scroll casing 22 serves as a portion of the second air passage R2. A portion of the lower scroll casing 22 below the partition plate 24 is defined as a portion of the second air passage R2. A portion of the blower fan 3 provided with the lower blades 31 is disposed in the second air passage R2 inside the lower scroll casing 22. The blower fan 3 rotating allows the portion of the blower fan 3 provided with the lower blades 31 to send air in the second air passage R2 as air-conditioning air. In other words, the portion of the blower fan 3 provided with the lower blades 31 is a portion of the blower fan 3 that forms a lower one of the air flows.

As illustrated in FIG. 2, a front portion of a left side wall portion of the lower scroll casing 22 has a lower air outlet 22c connected to the air conditioning unit. The lower air outlet 22c is located directly below the upper air outlet 21c. A downstream end of the second air passage R2 communicates with the lower air outlet 22c, and air in the second air passage R2 is blown out from the lower air outlet 22c to the outside of the lower scroll casing 22.

The bottom wall member 23 covers a lower end portion of the lower scroll casing 22, and is a cover-like member that covers the lower end portion. A peripheral portion of the bottom wall member 23 is formed to be fitted to a peripheral portion of the lower end portion of the lower scroll casing 22 to prevent air from leaking from the gap between the peripheral portion of the bottom wall member 23 and the peripheral portion of the lower end portion of the lower scroll casing 22.

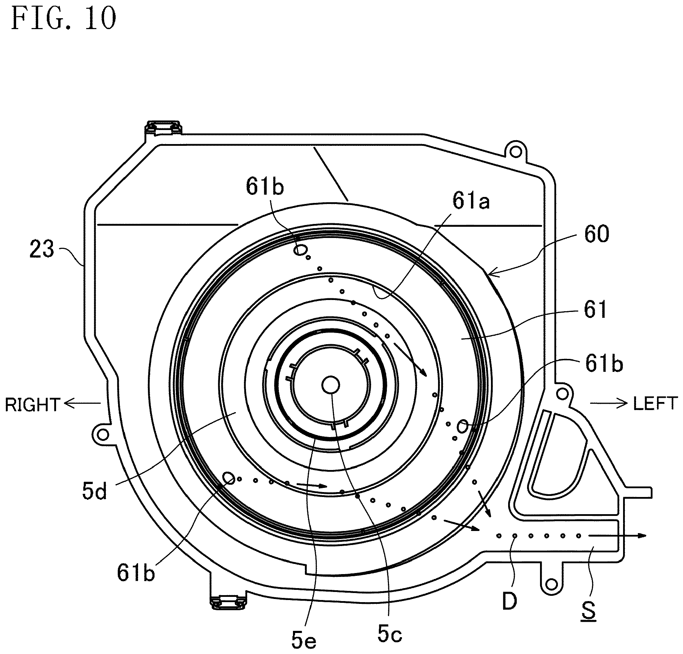

As illustrated in FIGS. 5 and 10, a drainage passage S is formed in the bottom wall member 23. The drainage passage S is positioned below the lower air outlet 22c and is for bringing water on the bottom surface of the bottom wall member 23 to flow in the left direction. The downstream end (left end) of the drainage passage S is connected to the interior of the air-conditioning casing of the air conditioning unit (not shown). This air-conditioning casing houses a cooling heat exchanger and is thus provided with a drainage hole for draining condensed water generated on the surface of the cooling heat exchanger. Accordingly, water entering the air-conditioning casing through the drainage passage S is drained outside through the drainage hole.

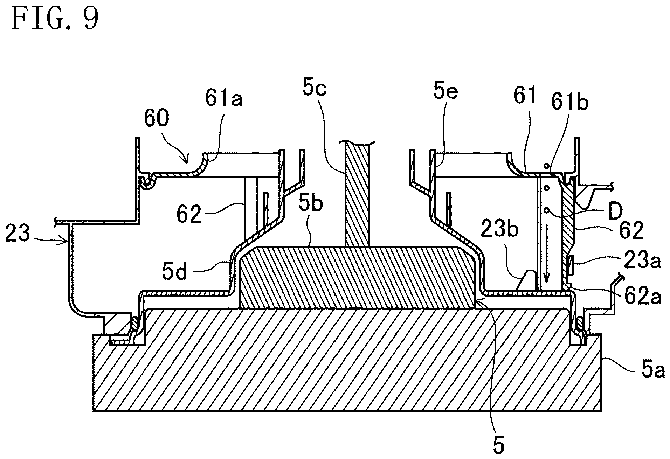

As illustrated in FIG. 9, the motor 5 is attached to the bottom wall member 23 via a motor attachment member 5a. The blower fan 3 is disposed above the motor 5. The motor attachment member 5a is fixed to the bottom wall member 23. The motor 5 is attached to the motor attachment member 5a. The motor 5 includes a body 5b including a rotor and other components, a rotation shaft 5c extending in the top-to-bottom direction, and a cover 5d covering the body 5b from above. The rotation shaft 5c protrudes upward from an upper end of the body 5b, passes through the cover 5d, and further protrudes upward beyond the cover 5d. The rotation shaft 5c is disposed concentrically with the first and second bell mouth orifices 21a and 61a. An upper end portion of the rotation shaft 5c is located above the second bell mouth orifice 61a.

The cover 5d has a cylindrical portion 5e surrounding the rotation shaft 5c. The cylindrical portion 5e may be circular cylindrical, and is disposed concentrically with the rotation shaft 5c. Instead of the cylindrical portion 5e, a plurality of arc-shaped wall portions may be provided. The rotation shaft 5c protrudes upward beyond an upper end of the cylindrical portion 5e.

The blower fan 3 is fixed to the rotation shaft 5c, and rotates together with the rotation shaft 5c. Thus, a voltage applied to the body 5b of the motor 5 brings a turning force of the rotation shaft 5c to be transferred to the blower fan 3. This allows the portion of the blower fan 3 provided with the upper blades 30 to rotate inside the first air passage R1, and allows the portion of the blower fan 3 provided with the lower blades 31 to rotate inside the second air passage R2. The body 5b of the motor 5 is connected to an air-conditioning control apparatus (not shown), which applies a voltage to the body 5b so that the motor 5 rotates at an intended rotational speed.

### (Advantages of Embodiment)

As can be seen from the foregoing description, according to the vehicle air-conditioning air blower 1 of this embodiment, when the inside air inlets 2a and 2b are opened, and the outside air inlet 2c is closed by operations of the inside/outside air switching dampers 6 and 7, the vehicle air-conditioning air blower 1 operates in the inside-air circulation mode in which inside air is introduced through the inside air inlets 2a and 2b thereinto. In the inside-air circulation mode, the blower fan 3 rotating allows the inside air introduced through the inside air inlets 2a and 2b to flow through the first and second air passages R1 and R2 and to be then sent as air-conditioning air.

When the inside air inlets 2a and 2b are closed, and the outside air inlet 2c is opened by operations of the inside/outside air switching dampers 6 and 7, the vehicle air-conditioning air blower 1 operates in the outside-air introduction mode in which outside air is introduced through the outside air inlet 2c thereinto. In the outside-air introduction mode, the blower fan 3 rotating allows the outside air introduced through the outside air inlet 2c to flow through the first and second air passages R1 and R2 and to be then sent as air-conditioning air.

Further, if the inside air inlets 2a and 2b and the outside air inlet 2c are operated by operations of the inside/outside air switching dampers 6 and 7, the vehicle air-conditioning air blower 1 operates in the inside-outside air double flow mode. The blower fan 3 rotating allows the outside air introduced through the outside air inlet 2c to flow through the first air passage R1, and allows the inside air introduced through the inside air inlets 2a and 2b to flow through the second air passage R2. Thus, a combination of the outside air and the inside air is sent as air-conditioning air. In other words, the vehicle air-conditioning air blower 1 according to this embodiment can select an optional one of the outside-air introduction mode, the inside-air circulation mode, and the inside-outside air double flow mode, and send air.

During air blowing, the second bell mouth orifice 61a is disposed to face the lower side of the blower fan 3, thereby improving air blowing efficiency. For example, if rainwater or car-washing water enters the interior of the scroll casing 20 through the outside air inlet 2c, it may be accumulated on the top of the bell mouth plate 61. The water on the top of the bell mouth plate 61 flows downward of the bell mouth plate 61 from the drainage hole 61b of the bell mouth plate. The reference character D (indicated by small drops) illustrated in FIGS. 5, 9, and 10 schematically shows water and a flow thereof.

Since each leg 62 extending downward is provided on the circumferences of the opening of the corresponding drainage hole 61b on the lower surface of the bell mouth plate 61, wind is avoided from reaching the circumference of the opening of the drainage hole 61b. Therefore, the water flowing downward of the bell mouth plate 61 is less likely to be splashed by the air sucked into the blower fan 3, thereby allowing drainage performance to be improved.

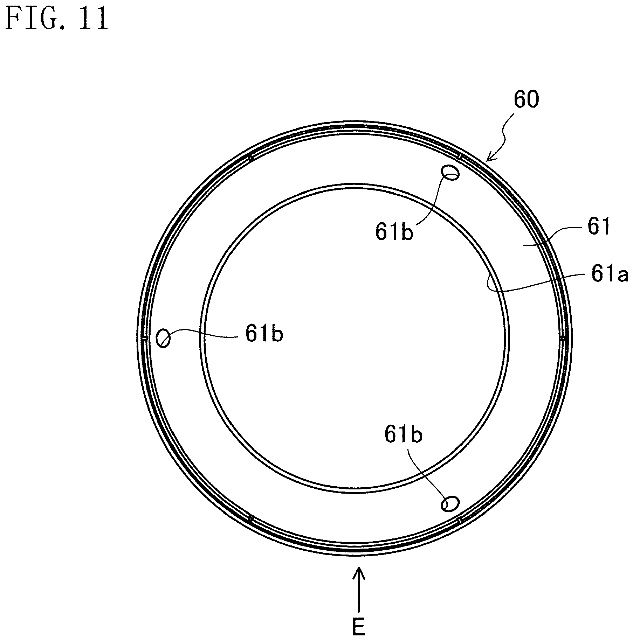

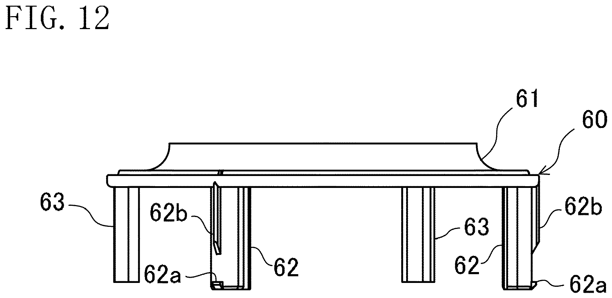

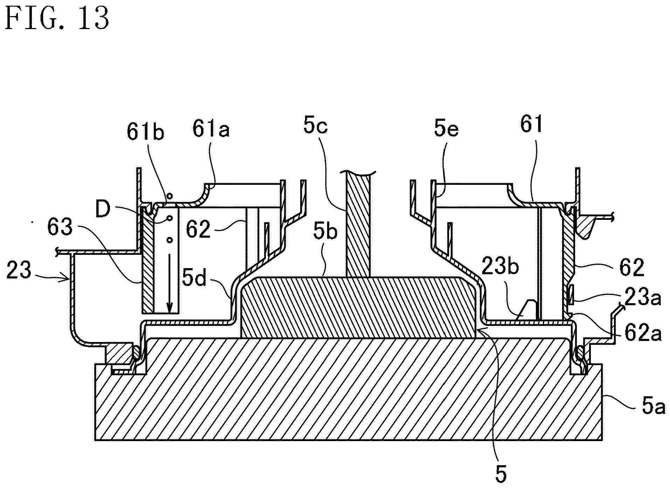

Wind shields 63 may be provided separately from the legs 62 supporting the bell mouth plate 61 from below such as in variations of the embodiment illustrated in FIGS 11 to 13. In this example, as illustrated in FIG. 11, drainage holes 61b are provided at positions different from those at which the drainage holes 61b illustrated in FIG. 6 are provided. Further, wind shields 63 are provided to extend downward from the circumferences of the openings of the respective drainage holes 61b on the lower surface of the bell mouth plate 61. Accordingly, the wind shields 63 are apart from the respective legs 62 in the circumferential direction of the blower fan 3.

Each of the wind shields 63 has a recessed cross section recessed in the radial direction of the blower fan 3 as in the legs 62. Each of the legs 62 has a lower end portion apart from the bottom surface of the scroll casing 20, but may be in contact with the same.

### INDUSTRIAL APPLICABILITY

As can be seen from the foregoing description, a vehicle air-conditioning air blower according to the present invention may be used, for example, as an air blower unit for a vehicle air conditioner.

### DESCRIPTION OF REFERENCE CHARACTERS

- 1: Vehicle Air-Conditioning Air Blower
- 2: Blowing Casing
- 2a, 2b: Inside Air Inlet
- 2c: Outside Air Inlet
- 3: Blower Fan
- 5: Motor
- 5b: Body
- 5c: Rotation Shaft
- 5d: Cover
- 5e: Cylindrical Portion
- 20: Scroll Casing
- 30: Upper Blade (First Blade)
- 31: Lower Blade (Second Blade)
- 60: Bell Mouth Component
- 61: Bell Mouth Plate
- 61a: Bell Mouth Orifice
- 61b: Drainage Hole
- 62: Leg (Wind Shield)
- 63: Wind Shield
- R1: First Air Passage
- R2: Second Air Passage

## Claims

1. A vehicle air-conditioning air blower (1) configured to be mounted in a vehicle, comprising :
a casing (2) having an inside air inlet (2a, 2b) through which air inside a cabin is introduced into the casing (2), and an outside air inlet (2c) through which air outside the cabin is introduced into the casing (2), the casing (2) further having a first air passage (R1) and a second air passage (R2) each communicating with both of the inside air inlet (2a, 2b) and the outside air inlet (2c), the casing (2) housing an inside/outside air switching damper (6, 7) that opens and closes the inside air inlet (2a, 2b) and the outside air inlet (2c);
a centrifugal blower fan (3) disposed inside the casing (2) and having a first blower fan (3) defined as a portion of the blower fan (3) providing with a first blade (30) and a second blower fan (3) defined as a portion of the blower fan (3) providing with a second blade (31); and
a motor (5) disposed below the blower fan (3) and having a rotational shaft (5c) that rotates to drive the blower fan (3) and that extends vertically,
the first blower fan (3) sending air in the first air passage (R1) as air-conditioning air by the first blade (30), the second blower fan (3) sending air in the second air passage (R2) as air-conditioning air by the second blade (31), wherein
the vehicle air-conditioning air blower (1) further includes a bell mouth component (60) including a bell mouth plate (61) that has a bell mouth orifice (61a) disposed to face a lower side of the blower fan (3) and extending in a radial direction of the blower fan (3),
the bell mouth plate (61) has an outer circumferential side with respect to the bell mouth orifice (61a), **characterized in that** the outer circumferential side has a drainage hole (61b) through which water on the top of the bell mouth plate (61) is drained downward of the bell mouth plate (61), and
the bell mouth component (60) includes a wind shield (62, 63) that extends downward from the circumference of an opening of the drainage hole (61b) on the lower surface of the bell mouth plate (61) and that avoids wind from reaching the circumference of the opening.

2. The vehicle air-conditioning air blower (1) of claim 1, wherein
the bell mouth component (60) is a member different from the casing (2).

3. The vehicle air-conditioning air blower (1) of claim 2, wherein
the wind shield is a leg (62) supporting the bell mouth plate (61) from below.

4. The vehicle air-conditioning air blower (1) of claim 2, wherein
the bell mouth component (60) has a leg (62) supporting the bell mouth plate (61) from below, and
the wind shield (63) is apart from the leg (62) in the circumferential direction of the blower fan (3).

5. The vehicle air-conditioning air blower (1) of claim 3, wherein
the wind shield (62) has a recessed cross section recessed in a radial direction of the blower fan (3).

6. The vehicle air-conditioning air blower (1) of claim 5, wherein
the wind shield (62) has a recessed cross section recessed inward in a radial direction of the blower fan (3).

7. The vehicle air-conditioning air blower (1) of claim 1, wherein
a lower end portion of the wind shield (62, 63) is in contact with a bottom surface of the casing (2).

8. The vehicle air-conditioning air blower (1) of claim 1, wherein
an inner circumferential side of the bell mouth plate (61) has a curved portion curved upward toward the bell mouth orifice (61a), and
an outer circumferential side of the bell mouth plate (61) with respect to the curved portion is flat and has the drainage hole (61b).

## Patentansprüche

1. Blasvorrichtung für Fahrzeugklimatisierung (1), die konfiguriert ist, um in einem Fahrzeug montiert zu werden, umfassend:
ein Gehäuse (2) mit einem Innenlufteinlass (2a, 2b), durch den Luft in einem Fahrzeugraum in das Gehäuse (2) eingeführt wird, und einen Außenlufteinlass (2c), durch den Luft außerhalb des Fahrzeugraums in das Gehäuse (2) eingeführt wird, wobei das Gehäuse (2) ferner einen ersten Luftdurchlass (R1) und einen zweiten Luftdurchlass (R2) aufweist, die jeweils mit dem Innenlufteinlass (2a, 2b) und dem Außenlufteinlass (2c) kommunizieren, wobei das Gehäuse (2) eine Innen-/Außenluft-Schalt-Schlagsperre (6, 7) beherbergt, die den Innenlufteinlass (2a, 2b) und den Außenlufteinlass (2c) öffnet und schließt;
ein Zentrifugalgebläse (3), das im Gehäuse (2) angeordnet ist und ein erstes Gebläse (3), das als ein Abschnitt des Gebläses (3) definiert ist und eine erste Schaufel (30) bereitstellt, und ein zweites Gebläse (3), das als ein Abschnitt des Gebläses (3) definiert ist und eine zweite Schaufel (31) bereitstellt, aufweist;
einen Motor (5), der unter dem Gebläse (3) angeordnet ist und eine Rotationswelle (5c) aufweist, die rotiert, um das Gebläse (3) anzutreiben, und die sich vertikal erstreckt;
wobei das erste Gebläse (3) Luft als Klimatisierungsluft durch die erste Schaufel (30) in den ersten Luftdurchlass (R1) sendet, das zweite Gebläse (3) Luft als Klimatisierungsluft durch die zweite Schaufel (31) in den zweiten Luftdurchlass (R2) sendet, wobei
die Blasvorrichtung (1) für Fahrzeugklimatisierung ferner eine Trichtermündungskomponente (60) enthält, enthaltend eine Trichtermündungsplatte (61), die eine Trichtermündungsöffnung (61a) aufweist, die so angeordnet ist, dass sie einer unteren Seite des Gebläses (3) gegenüberliegt und sich in einer Radialrichtung des Gebläses (3) erstreckt,
die Trichtermündungsplatte (61) eine Außenumfangsseite bezüglich der Trichtermündungsöffnung (61a) aufweist, **dadurch gekennzeichnet, dass** die Außenumfangsseite ein Drainageloch (61b) aufweist, durch das Wasser auf der Oberseite der Trichtermündungsplatte (61) nach unten bezüglich der Trichtermündungsplatte (61) abläuft, und
die Trichtermündungskomponente (60) einen Windschutz (62, 63) aufweist, der sich vom Umfang einer Öffnung des Drainagelochs (61b) auf der unteren Oberfläche der Trichtermündungsplatte (61) nach unten erstreckt und verhindert, dass Wind den Umfang der Öffnung erreicht.

2. Blasvorrichtung für Fahrzeugklimatisierung (1) nach Anspruch 1, wobei die Trichtermündungskomponente (60) ein vom Gehäuse (2) unterschiedliches Element ist.

3. Blasvorrichtung für Fahrzeugklimatisierung (1) nach Anspruch 2, wobei der Windschutz ein Schenkel (62) ist, der die Trichtermündungsplatte (61) von unten unterstützt.

4. Blasvorrichtung für Fahrzeugklimatisierung (1) nach Anspruch 2, wobei die Trichtermündungskomponente (60) einen Schenkel (62) aufweist, der die Trichtermündungsplatte (61) von unten unterstützt, und
der Windschutz (63) in Umfangsrichtung des Gebläses (3) vom Schenkel (62) getrennt ist.

5. Blasvorrichtung für Fahrzeugklimatisierung (1) nach Anspruch 3, wobei
der Windschutz (62) einen ausgesparten Querschnitt aufweist, der in einer Radialrichtung des Gebläses (3) ausgespart ist.

6. Blasvorrichtung für Fahrzeugklimatisierung (1) nach Anspruch 5, wobei
der Windschutz (62) einen ausgesparten Querschnitt aufweist, der in einer Radialrichtung des Gebläses (3) nach innen ausgespart ist.

7. Blasvorrichtung für Fahrzeugklimatisierung (1) nach Anspruch 1, wobei
ein unterer Endabschnitt des Windschutzes (62, 63) in Kontakt mit einer unteren Oberfläche des Gehäuses (2) ist.

8. Blasvorrichtung für Fahrzeugklimatisierung (1) nach Anspruch 1, wobei
eine Innenumfangsseite der Trichtermündungsplatte (61) einen gekrümmten Abschnitt aufweist, der nach oben zur Trichtermündungsöffnung (61a) gekrümmt ist, und
eine Außenumfangsseite der Trichtermündungsplatte (61) bezüglich des gekrümmten Abschnitts flach ist und das Drainageloch (61b) aufweist.

## Revendications

1. Soufflante d'air de climatisation de véhicule (1) configurée pour être montée dans un véhicule, comprenant :
un boîtier (2) ayant une entrée d'air intérieur (2a, 2b) à travers laquelle l'air à l'intérieur d'une cabine est introduit dans le boîtier (2), et une entrée d'air extérieur (2c) à travers laquelle l'air à l'extérieur de la cabine est introduit dans le boîtier (2), le boîtier (2) ayant en outre un premier passage d'air (R1) et un deuxième passage d'air (R2) communiquant chacun avec l'entrée d'air intérieur (2a, 2b) et l'entrée d'air extérieur (2c), le boîtier (2) recevant un registre de commutation d'air intérieur/extérieur (6, 7) qui ouvre et ferme l'entrée d'air intérieur (2a, 2b) et l'entrée d'air extérieur (2c) ;
un ventilateur soufflant centrifuge (3) disposé à l'intérieur du boîtier (2) et ayant un premier ventilateur soufflant (3) défini comme une partie du ventilateur soufflant (3) munie d'une première pale (30) et un deuxième ventilateur soufflant (3) défini comme une partie du ventilateur soufflant (3) munie d'une deuxième pale (31) ; et
un moteur (5) disposé en dessous du ventilateur soufflant (3) et ayant un arbre de rotation (5c) qui tourne pour entraîner le ventilateur soufflant (3) et qui s'étend verticalement,
le premier ventilateur soufflant (3) envoyant de l'air dans le premier passage d'air (R1) en tant qu'air de climatisation par la première pale (30), le deuxième ventilateur soufflant (3) envoyant de l'air dans le deuxième passage d'air (R2) en tant qu'air de climatisation par la deuxième pale (31), dans laquelle
la soufflante d'air de climatisation de véhicule (1) comprend en outre un composant pavillon (60) comprenant une plaque de pavillon (61) qui a un orifice de pavillon (61a) disposé pour faire face à un côté inférieur du ventilateur soufflant (3) et s'étendant dans une direction radiale du ventilateur soufflant (3),
la plaque de pavillon (61) a un côté circonférentiel externe par rapport à l'orifice de pavillon (61a), **caractérisée en ce que** le côté circonférentiel externe a un trou d'évacuation (61b) à travers lequel l'eau en haut de la plaque de pavillon (61) est évacuée vers le bas de la plaque de pavillon (61), et
le composant pavillon (60) comprend un pare-vent (62, 63) qui s'étend vers le bas depuis la circonférence d'une ouverture du trou d'évacuation (61b) sur la surface inférieure de la plaque de pavillon (61) et qui empêche le vent d'atteindre la circonférence de l'ouverture.

2. Soufflante d'air de climatisation de véhicule (1) de la revendication 1, dans laquelle
le composant pavillon (60) est un élément différent du boîtier (2).

3. Soufflante d'air de climatisation de véhicule (1) de la revendication 2, dans laquelle
le pare-vent est une patte (62) supportant la plaque de pavillon (61) par le bas.

4. Soufflante d'air de climatisation de véhicule (1) de la revendication 2, dans laquelle
le composant pavillon (60) a une patte (62) supportant la plaque de pavillon (61) par le bas, et
le pare-vent (63) est espacé de la patte (62) dans la direction circonférentielle du ventilateur soufflant (3).

5. Soufflante d'air de climatisation de véhicule (1) de la revendication 3, dans laquelle
le pare-vent (62) a une section transversale en retrait qui est en retrait dans une direction radiale du ventilateur soufflant (3).

6. Soufflante d'air de climatisation de véhicule (1) de la revendication 5, dans laquelle
le pare-vent (62) a une section transversale en retrait qui est en retrait vers l'intérieur dans une direction radiale du ventilateur soufflant (3).

7. Soufflante d'air de climatisation de véhicule (1) de la revendication 1, dans laquelle
une partie d'extrémité inférieure du pare-vent (62, 63) est en contact avec une surface de fond du boîtier (2).

8. Soufflante d'air de climatisation de véhicule (1) de la revendication 1, dans laquelle
un côté circonférentiel interne de la plaque de pavillon (61) a une partie incurvée qui est incurvée vers le haut en direction de l'orifice de pavillon (61a), et
un côté circonférentiel externe de la plaque de pavillon (61) par rapport à la partie incurvée est plat et a le trou d'évacuation (61b).
